# EUROPÄISCHE PATENTSCHRIFT

(11) **EP 0 655 422 B1**
(45) Veröffentlichungstag und Bekanntmachung des Hinweises auf die Patenterteilung: **12.08.1998**
(21) Anmeldenummer: 93119071.4
(22) Anmeldetag: 26.11.1993
(51) Int. Cl.: C03B 3/00, C03B 5/00

(54) **Verfahren zum Herstellen einer Schmelze für die Mineralfaserherstellung**
Method for making a melt for mineral fiber production
Procédé de fabrication d'un bain de fusion pour la production de fibres minérales

(43) Veröffentlichungstag der Anmeldung: 31.05.1995
(73) Patentinhaber: Deutsche Rockwool Mineralwoll-GmbH, 45966 Gladbeck (DE)
(72) Erfinder: Franz, Klaus, D-44795 Bochum (DE)
(74) Vertreter: Wanischeck-Bergmann, Axel, Dipl.-Ing.

(56) Entgegenhaltungen:
- EP-A- 0 137 881
- EP-A- 0 347 047
- WO-A-92/04286
- GB-A- 1 320 377
- US-A- 2 527 144

## Beschreibung

Die Erfindung bezieht sich auf ein Verfahren zur Herstellung einer Schmelze für die Mineralfaserproduktion, wobei das zu schmelzende Rohmaterial als Schüttgut aufgegeben wird, so daß dieses eine geneigte Schüttgutoberfläche bildet, und wobei mindestens ein Teil der Schüttgutoberfläche zur Bildung einer Schmelzzone der Schmelztemperatur eines Brennraumes ausgesetzt wird und die im Bereich der Schüttgutoberfläche unter Bildung einer Schmelzoberflächenkruste herabfließende Schmelze in einem Sammelraum auf dem Boden des Brennraumes gesammelt und nach außen zur Weiterverarbeitung abgeführt wird.

Ein Verfahren sowie ein Schmelzofen zur Durchführung des Verfahrens der zuvor genannten Gattung ist bereits aus der WO 92/04286 bekannt. Hieraus ist auch bekannt, zusätzlich zu dem Rohmaterial Abfall- bzw. Recyclingmaterial zur Wiedergewinnung aufzugeben. Die Aufgabe erfolgt hier jedoch direkt in den Brennraum, in welchem starke Gaswirbel herrschen, so daß die Gefahr besteht, daß zumindest ein Teil dieses Materials an die Wände und das Gewölbe der Brennkammer gelangt.

Darüber hinaus ist aus der EP-A-0 137 881 ein Verfahren sowie ein Schmelzofen zur Herstellung einer Schmelze für die Mineralfaserproduktion bekannt. Bei diesem vorbekannten Verfahren wird das zu schmelzende Rohmaterial als Schüttgut aufgegeben, so daß dieses eine geneigte Schüttgutoberfläche bildet. Ein Teil der Schüttgutoberfläche wird zur Bildung einer Schmelzzone ein der Schmelztemperatur eines Brennraums ausgesetzt, wodurch das Material im Bereich der Schüttgutoberfläche unter Bildung einer Schmelzoberflächenkruste in einen Sammelraum auf dem Boden des Brennraums abfließt und dort gesammelt wird. Von hier aus gelangt die Schmelze zur Weiterverarbeitung, d.h. wird beispielsweise einem Zerfaserungsaggregat zugeführt.

Der Erfindung liegt die Aufgabe zu Grunde, das bekannte Verfahren zu verbessern und ein Verfahren zu schaffen, durch welches die Schmelzleistung wesentlich erhöht werden kann.

Die gestellte Aufgabe wird erfindungsgemäß dadurch gelöst, daß die Schmelzoberflächenkruste der Schüttgutoberfläche von der Innenseite aus mindestens in einem Bereich aufgebrochen wird.

Auf diese Weise ergibt sich der Vorteil, daß ein besseres und schnelleres Nachrutschen des zu schmelzenden Rohmaterials im Bereich der Schmelzoberflächenkruste ermöglicht wird, wobei sich das Aufbrechen bzw. Zerstören der Kruste nicht nur in dem direkt betroffenen engen Bereich, sondern auch auf die weitere Umgebung auswirkt. Dadurch wird der Schmelzvorgang erheblich beschleunigt und das Abfließen der Schmelze begünstigt.

Im allgemeinen genügt es, das Aufbrechen bzw. Zerstören der Schmelzoberflächenkruste, die sich auf der Schüttgutoberfläche bildet, nur in einem, beispielsweise im mittleren Bereich der Schüttgutoberfläche vorzunehmen, um insgesamt eine intensive Bewegung im Schüttgut, insbesondere in der Schüttgutoberfläche auszulösen. Bei großen Schmelzöfen mit entsprechend großen Mengen an enthaltenem Rohmaterial ist es von Vorteil, daß das Aufbrechen der Schmelzoberflächenkruste an mehreren neben- und / oder übereinanderliegenden Bereichen vorgenommen wird.

Eine besonders vorteilhafte Weiterentwicklung des erfindungsgemäßen Verfahrens wird dadurch erreicht, daß auf die Innenseite der Schmelzoberflächenkruste Recyclingmaterial bzw. Abfallmaterial aufgegeben wird.

Auf diese Weise ergibt sich der wesentliche Vorteil, daß das Abfall- bzw. Recyclingmaterial so in die Schmelzzone eingebracht wird, daß dieses Material nicht von den Gaswirbeln im Innenraum der Brennkammer erfaßt werden kann. Dabei ergibt sich noch der weitere vorteilhafte Nebeneffekt, daß sich auf der Innenseite der aufgebrochenen bzw. zerstörten Schmelzoberflächenkruste ein Polster bzw. ein Bett aus Abfall- bzw. Recyclingmaterial bildet, auf dem das Rohmaterial noch leichter nachrutschen und besser zur Schmelzzone gelangen kann.

Die Erfindung betrifft ferner einen Schmelzofen, wobei von dem aus der WO 92/04286 bekannten Schmelzofen ausgegangen wird. Dieser bekannte Schmelzofen ist mit einer Aufgabevorrichtung für das zu schmelzende Rohmaterial versehen, ferner mit einem Aufnahmeraum für das Rohmaterial, so daß dieses eine geneigte Schüttgutoberfläche bildet. Ferner besitzt der Schmelzofen mindestens einen seitlichen Brennraum, der mit mindestens einem Brenner ausgestattet ist, so daß auf der Schüttgutoberfläche eine Schmelzzone mit einer Schmelzoberflächenkruste gebildet wird. Schließlich ist ein Sammelraum für die Schmelze sowie ein Auslaß für die Schmelze vorhanden.

Die erfindungsgemäße Verbesserung und Ausgestaltung besteht darin, daß mindestens ein an den Enden offener Hohlkörper im Bereich des Rohmaterials angeordnet ist, der mit Abstand von der Innenseite der Schmelzoberflächenkruste mündet, und daß in dem Hohlkörper ein bewegliches Schubelement vorgesehen ist, welches mit dem aus dem Hohlkörper herausragenden Ende in die Schmelzoberflächenkruste eingreift.

Vorteilhafte Ausgestaltungen des erfindungsgemäßen Schmelzofens ergeben sich aus den Unteransprüchen, die nachfolgend anhand der Zeichnungsbeschreibung im einzelnen erläutert werden.

In der Zeichnung sind Ausführungsbeispiele des erfindungsgemäßen Schmelzofens im Schema dargestellt, und zwar zeigen
Fig. 1 einen Vertikalschnitt durch einen Schmelzofen,
Fig. 2 einen Vertikalschnitt gemäß Fig. 1, jedoch in einer anderen Ausgestaltung und
Fig. 3 einen Schnitt gemäß Fig. 1, jedoch wiederum in einer anderen Ausgestaltung.

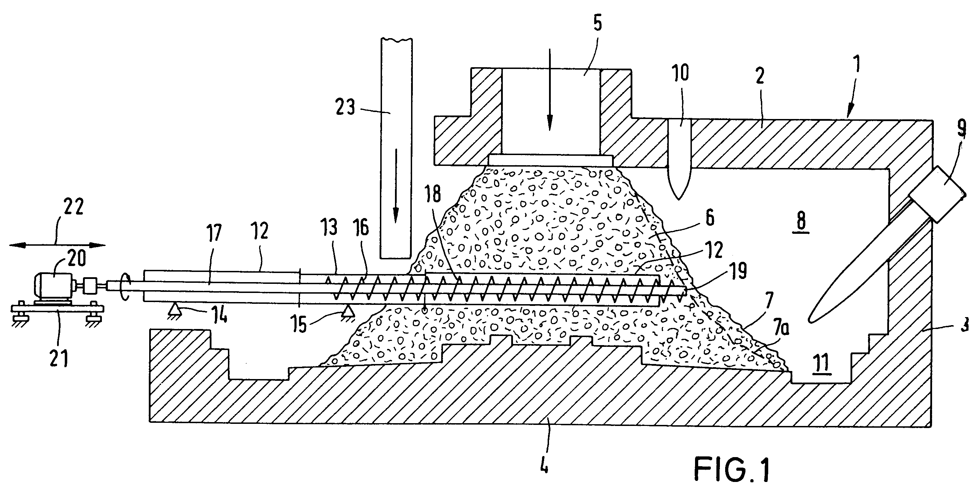

Fig. 1 zeigt im Vertikalschnitt und der besseren Deutlichkeit halber vereinfacht ein Ausführungsbeispiel eines Schmelzofens 1 mit einer oberen Wand 2 oder einem Gewölbe, einer Seitenwand 3 und einem Boden 4. Es versteht sich, daß parallel zur Zeichnungsebene weitere, vorzugsweise vertikale Begrenzungswände vorgesehen sind, ebenso wie im linken Teil der Zeichnung. Auch hier können Begrenzungswände vorhanden sein, die den Innenraum des Schmelzofens nach außen abschließen. Insbesondere wenn die Menge an Rohmaterial groß genug ist und die Verbrennungsabgase vollständig durch das Rohmaterial nach oben hin abgeführt werden, können Wände im linken Teil der Fig. 1, wie dargestellt, weggelassen werden. In der oberen Wand 2 befindet sich eine vereinfacht gezeichnete Aufgabevorrichtung 5, durch die das zu schmelzende Rohmaterial 6 dosiert in den Schmelzofen eingebracht wird. Das Rohmaterial besteht aus üblichen Bestandteilen, wie Gestein, Koks und Zuschlagstoffen. Wenn im Innern des Schmelzofens genügend Raum vorhanden ist und wenn die Aufgabe des Rohmaterials nur an einer Stelle, beispielsweise durch einen zylindrischen Schacht der Aufgabevorrichtung 5 erfolgt, bildet das Rohmaterial einen Schüttgutkegel, genauer gesagt einen Kegelstumpf, mit einer geneigten Schüttgutoberfläche 7, deren Neigungswinkel vom aufgegebenen Rohmaterial abhängig ist. Wenn die Aufgabe an mehreren senkrecht zur Bildebene nebeneinanderliegenden Stellen oder durch einen rechteckigen, senkrecht zur Bildebene verlaufenden Schacht erfolgt, bildet sich eine mehr oder weniger ebene Schüttgutoberfläche, die senkrecht zur Bildebene verläuft. Seitlich der Schüttgutoberfläche 7 befindet sich der Brennraum 8, der mit mindestens einem Brenner, im dargestellten Ausführungsbeispiel mit zwei Brennern 9 und 10 ausgestattet ist. Die Anordnung und Ausrichtung der Brenner sind von den Gegebenheiten abhängig. Normalerweise werden Gas- oder Ölbrenner oder andere geeignete Brenner verwendet, so daß sich auf der Schüttgutoberfläche eine Schmelzzone bildet, die sich möglichst über einen großen Teil der Schüttgutoberfläche 7 erstreckt. In der Schmelzzone schmilzt das Gestein und fließt nach unten in einen Sammelraum 11, von wo aus die Schmelze zur Weiterverarbeitung für die Mineralfaserproduktion abgeleitet wird.

Im Bereich der Schmelzzone bildet sich, gestrichelt gezeichnet, eine Art Schmelzoberflächenkruste 7a, die bis in eine gewisse Tiefe von der Schüttgutoberfläche 7 reicht. Um ein besseres und schnelleres Nachrutschen des stückigen Rohmaterials, also der zu schmelzenden Steine zu erreichen und gleichzeitig das Herabfließen der Schmelze zu begünstigen, ist die nachfolgend erläuterte Vorrichtung vorgesehen.

Die Vorrichtung weist einen feststehenden an den Enden offenen länglichen Hohlkörper 12 auf, welcher gemäß Fig. 1 mit seinem rechten Teil in dem Raum angeordnet ist, in dem sich das Rohmaterial 6 befindet. Der Hohlkörper 12 endet, wie dargestellt, mit Abstand von der Innenseite der Schmelzoberflächenkruste und mit Abstand von der Schüttgutoberfläche 7. An dem linken aus dem Rohmaterial herausragenden Teil ist der Hohlkörper an einer im einzelnen nicht dargestellten Bühnenkonstruktion befestigt, wie vereinfacht mit den Festlagern 14 und 15 angedeutet ist. In dem Hohlkörper 12 ist ein bewegliches Schubelement vorgesehen, welches mit dem aus dem Hohlkörper herausragenden Ende in die Schmelzoberflächenkruste 7a eingreift, und zwar wird auf diese Weise durch hin- und hergehende Bewegung des Schubelementes und durch wiederholte Stöße die Schmelzoberflächenkruste 7a aufgebrochen bzw. zerstört. Dabei tritt noch eine Nebenwirkung ein, nämlich daß die im Brennraum 8 vorhandenen Rauchgase leichter in das Rohmaterial eindringgen können, um dann, wie üblich, durch die Aufgabevorrichtung 5 und einen anschließenden nicht gezeichneten Rauchgasabzug abgeleitet zu werden.

Vorteilhafterweise ist der Hohlkörper als Rohr 12 ausgebildet, welches im Bereich des Rohmaterials 6 einen geschlossenen Mantel aufweist. Ferner ist, wie zeichnerisch dargestellt, das Schubelement mit einer Förderschnecke 16 versehen. Das Rohr 12 ist in einem Bereich außerhalb des Aufnahmeraumes, in dem sich das Rohmaterial befindet, als nach oben offener Schneckentrog 13 ausgebildet. Oberhalb des Schneckentroges 13 ist eine Aufgabevorrichtung 23 für die Zugabe von Abfall- bzw. Recyclingmaterial angeordnet. Auf Grund dieser Konstruktion ist es möglich, daß das Abfall- bzw. Recyclingmaterial mittels der Förderschnecke 16 bis in den Bereich der Schmelzoberflächenkruste 7a gefördert wird, wo es sich mit dem übrigen Rohmaterial vermischt. Eine vorteilhafte konstruktive Ausgestaltung ergibt sich dadurch, daß die Förderschnecke 16 aus einer Welle 17 und einer aufgeschweißten Schneckenwendel 18 besteht, welche sich von dem Schneckentrog 13 bis in die Schmelzoberflächenkruste 7 erstreckt. Die Welle 17 ragt mit ihrem äußeren in Fig. 1 linken Ende aus dem Rohr 12 heraus und ist mit einem Antrieb 20, vorzugsweise einem Elektro-Getriebemotor, verbunden, so daß die Welle 17 und die Schneckenwendel 18 um ihre Achse drehbar sind. Die Drehzahl ist vorteilhafterweise regelbar. Die Schneckenwendel 18 hat vorteilhafterweise einen Außendurchmesser von etwa 275 mm. Die Förderschnecke 16 ist formmäßig dem Rohr 12 angepaßt, d. h. es ist eine solche Ausgestaltung getroffen, daß bei materialmäßig gefüllter Förderschnecke keine Rauchgase durch das Rohr nach außen austreten können. In Abhängigkeit vom Füllungsgrad der Förderschnecke können etwa 20 bis 30 m³ je Stunde an Abfall- bzw. Recyclingmaterial zugeführt werden. Das Rohr 12 endet etwa 300 bis 600 mm, vorzugsweise etwa 500 mm innenseitig vor der Schmelzoberflächenkruste bzw. vor dem Bereich der Schüttgutoberfläche 7. Auf diese Weise wird das Rohr keinen unzulässig hohen thermischen Belastungen ausgesetzt. Da die Welle 17 und die Schneckenwendel 18 mit ihren vorderen Enden in die Schmelzoberflächenkruste eingreifen und damit entsprechend thermisch belastet sind, bestehen diese Bauteile aus einem hitzebeständigen Material. Dennoch kann es zu einem Verschleiß des inneren Endes 19 der Förderschnecke kommen. Aus diesem Grunde ist die Förderschnecke 16 vorteilhafterweise im Bereich des zugänglichen Schneckentroges 13 teilbar ausgebildet, so daß an dieser Stelle jeweils ein Verlängerungsstück eingesetzt werden kann.
Der Antrieb 20 für die Welle 17 und die Förderschnecke 16 ist mittels einer Konsole auf einer Linearführung 21 gelagert, so daß die Einheit als Antrieb 20, Welle 17 und Schnecke 16 in Axialrichtung gemäß Pfeil 22 hin- und herbewegt werden kann. Der Hub der Hin- und Herbewegung ist vorteilhafterweise stufenlos verstellbar. Er beträgt im Mittel etwa 300 mm. Auch die Hubfrequenz ist vorteilhafterweise regelbar und den gegebenen Verhältnissen anzupassen. Die Hin- und Herbewegung ist zweckmäßig mittels einer nicht gezeichneten Hydraulikvorrichtung steuerbar. Durch die Drehbewegung und gleichzeitige Hubbewegung der Förderschnecke wird erreicht, daß zum einen das Abfall- bzw. Recyclingmaterial bis an die Rückwand der Schmelzoberflächenkruste gefördert wird und zum anderen durch die Hubbewegung die Schmelzoberflächenkruste 7a, wie bereits erläutert, aufgebrochen oder zerstört wird und somit ein besseres Nachrutschen der zu schmelzenden Steine erfolgen kann. Die Aufgabevorrichtung 23 für die Zugabe von Abfall- und Recyclingmaterial ist vorteilhafterweise mit einer nicht dargestellten Dosiervorrichtung ausgestattet.

Wie Fig. 1 veranschaulicht, sind das Rohr 12 und die Förderschnecke 16 im wesentlichen waagerecht angeordnet, und zwar vorteilhafterweise etwa auf mittlerer Höhe zu der Schüttgutoberfläche 17.

Insbesondere bei größeren Schmelzöfen können auch mehrere Rohre neben- und / oder übereinander angeordnet werden, die dann zweckmäßigerweise abwechselnd betätigt werden. Dazu kann man dann entweder abwechselnd eine Schnecke einschieben und, wie oben erläutert, in Betrieb setzen, wobei es sich versteht, daß die nicht in Betrieb befindlichen Rohre am äußeren Ende verschlossen werden müssen. Eine andere Möglichkeit besteht, in jedem Rohr eine Schnecke zu belassen und den Antrieb 20 in Bezug auf die jeweils zu betätigende Schnecke zu verschieben und beispielsweise durch Schnellkupplungen mit der jeweiligen Welle zu verbinden. Wenn das Rohmaterial einen Schüttgutkegel gebildet hat, ist es auch möglich, mehrere Rohre radial zu der Kegeloberfläche anzuordnen. Der Antrieb kann dann beispielsweise über einen geeigneten Drehkranz verschwenkt und mit den jeweiligen Wellen bzw. Förderschnecken verbunden werden.

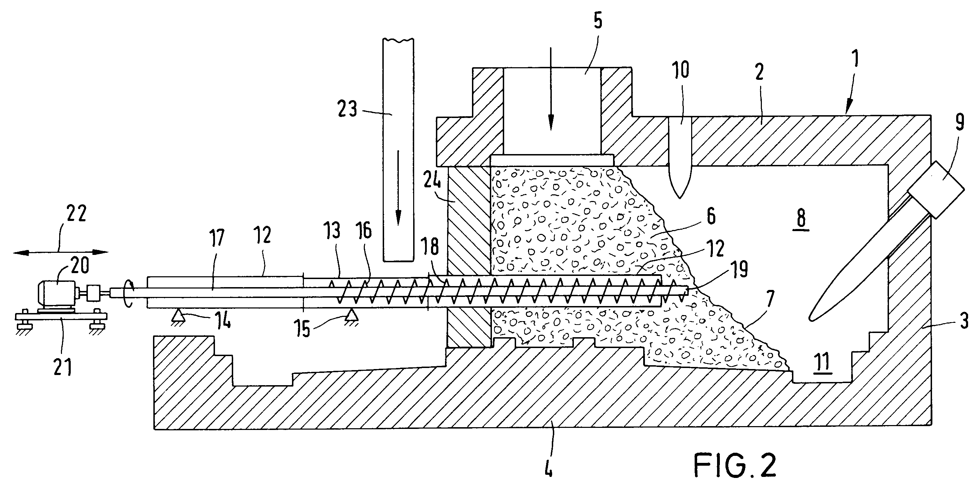

Fig. 2 zeigt noch ein Ausführungsbeispiel, welches im wesentlichen mit demjenigen nach Fig. 1 übereinstimmt, so daß für alle gleichen oder gleichwirkenden Teile die gleichen Bezugszeichen verwendet worden sind. In diesem Falle ist jedoch das Rohmaterial 6 von drei Seiten, also einmal durch die rückseitige Begrenzungswand 24 und durch zwei parallel zur Bildebene verlaufende Wände des Schmelzofens begrenzt, so daß sich nur eine einseitige Schüttgutoberfläche 7 nach dem Brennraum 8 zu ergibt.

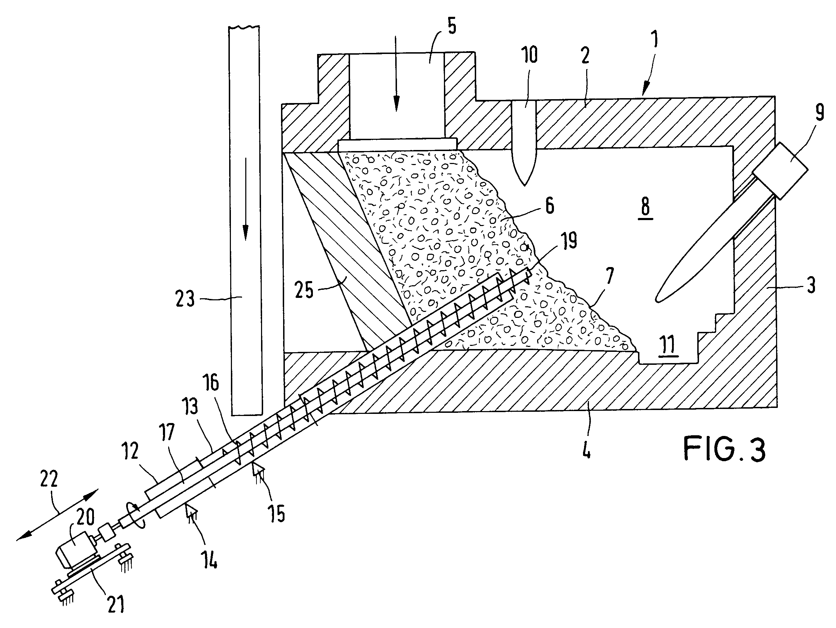

Fig. 3 zeigt ein weiteres Ausführungsbeispiel, bei dem ebenfalls für gleiche oder gleichwirkende Teile die gleichen Bezugszeichen wie in Fig. 1 verwendet worden sind. Hier sind das Rohr 12 und die Förderschnecke 16 schrägverlaufend, und zwar vorzugsweise senkrecht zu der Schmelzoberflächenkruste bzw. der Schüttgutoberfläche 7 angeordnet. Durch die schrägstehende rückwärtige Begrenzungswand 25 kann das Volumen des im Schmelzofen befindliche Rohmaterials verkleinert werden.

Bei allen Ausführungsbeispielen ist gemeinsam, daß bei der Drehbewegung der Förderschnecke immer wieder Steine bzw. Teile des Rohmaterials in die vorderen Schneckengänge fallen. Diese werden dann mit dem zugeführten Abfall- bzw. Recyclingmaterial nach vorne zur Schmelzzone gedrückt, wodurch ein zusätzlicher Aufbrechungs- bzw. Zerstörungseffekt in Bezug auf die Schmelzoberflächenkruste entsteht.

Wenn es darum geht, eine weitere Bewegung in das Rohmaterial einzuleiten, kann man das Rohr 12 im Bereich des Rohmaterials 6 mit äußeren Rippen oder sonstigen Vorsprüngen versehen und die beschriebenen Festlager 14, 15 so gestalten, daß sie eine Hubbeweglichkeit für das Rohr 12 gestatten, so daß man zum Beispiel über Hydraulikvorrichtungen oder dergleichen Hubbewegungen, Schläge oder Rüttelbewegungen aufbringen kann.

Die Hydraulikvorrichtungen, die an dem Rohr 12 angreifen, können in der Art ausgebildet sein, wie die oben beschriebene Hubvorrichtung für die Schnecke. Das Aufbrechen der Schmelzoberflächenkruste 7a durch das Schneckenende 19 wird durch die Hubbewegung des Rohres 12 begünstigt, und zwar kann das nach der Schmelzoberflächenkruste 7a zu liegende Ende des Rohres 12 ebenfalls bis in die Schmelzoberflächenkruste hubweise hineinragen. Es sind dann zweckmäßig, dieses vordere Ende des Rohres 12 aus hitzebeständigem Material, vorzugsweise aus Hartmetall, auszubilden. Um eine Bewegung im Rohmaterial 6 zu erzeugen, ist das Rohr 12 im Bereich des Rohamterials mit äußeren Rippen oder Vorsprüngen versehen.

Eine nicht gezeichnete Alternative des Schmelzofens, in Anlehnung an das Ausführungsbeispiel gemäß Fig. 1, ergibt sich dadurch, daß die Aufgabevorrichtung 5 für das Rohmaterial 6 derart gestaltet ist, daß das Rohmaterial 6 zwischen zwei vertikalen und mit Abstand voneinander angeordneten Schmelzofenwänden, die parallel zur Zeichnungsebene der Fig. 1 verlaufen, einen derartigen Rücken mit zwei geneigten Schüttgutoberflächen bildet. In der Praxis ist also der rechte Teil des Schmelzofens gemäß Fig. 1 um die vertikale Mittelebene spiegelsymmetrisch nach links umgeklappt, so daß beiderseits der so gebildeten Schüttgutoberflächen je ein Brennraum vorhanden ist. Die Hohlkörper bzw. Rohre 12 und Schubelemente 16, 17, 18 und 19, vorzugsweise in Form der beschriebenen Schnecken, sind dann zueinander versetzt und im übrigen derart angeordnet, daß nur ihre inneren Ende nahe der Schmelzoberflächenkrusten 7a zu liegen kommen und, wie gesagt, seitlich jeder der geneigten Schüttgutoberflächen je ein Brennraum 8 angeordnet ist. Die Anordnung der Rohre 12 und der Schnecken kann dann in der Praxis so vorgesehen sein, wie Fig. 3 zeigt, also schräg von unten durch den Boden des Schmelzofens. Je nach gegebenen Platzverhältnissen kann die Anordnung der Rohre und Schnecken auch senkrecht von unten durch den Boden vorgesehen werden. Es versteht sich, daß bei dieser doppelseitigen bzw. symmetrischen Anordnung von zwei Brennräumen eine Mittelwand 24 gemäß Fig. 2 oder eine Schrägwand 25 gemäß Fig. 3 nicht vorgesehen ist. Bei anderer Ausgestaltung des Rückens oder Schüttgutkegels des Rohmaterials können auch mehrere Brennräume an geeigneten Umfangsstellen und jeweils seitlich der Schüttgutoberflächen des Rohmaterials angeordnet werden.

## Patentansprüche

1. Verfahren zur Herstellung einer Schmelze für die Mineralfaserproduktion, wobei das zu schmelzende Rohmaterial (6) als Schüttgut aufgegeben wird, so daß dieses eine geneigte Schüttgutoberfläche (7) bildet, und wobei mindestens ein Teil der Schüttgutoberfläche (7) zur Bildung einer Schmelzzone der Schmelztemperatur eines Brennraumes (8) ausgesetzt wird und die im Bereich der Schüttgutoberfläche (7) unter Bildung einer Schmelzoberflächenkruste (7a) herabfließende Schmelze in einem Sammelraum (11) auf dem Boden des Brennraumes (8) gesammelt und nach außen zur Weiterverarbeitung abgeführt wird, dadurch gekennzeichnet, daß die Schmelzoberflächenkruste (7a) der Schüttgutoberfläche (7) von der Innenseite aus mindestens in einem Bereich aufgebrochen wird.

2. Verfahren nach Anspruch 1, dadurch gekennzeichnet, daß das Aufbrechen der Schmelzoberflächenkruste (7a) an mehreren neben- und / oder übereinanderliegenden Bereichen vorgenommen wird.

3. Verfahren nach Anspruch 1 oder 2, dadurch gekennzeichnet, daß auf die Innenseite der Schmelzoberflächenkruste (7a) Recyclingmaterial (23) bzw. Abfallmaterial aufgegeben wird.

4. Schmelzofen zur Durchführung des Verfahrens nach einem der Ansprüche 1 bis 3, mit einer Aufgabevorrichtung (5) für das zu schmelzende Rohmaterial (6), mit einem Aufnahmeraum für das Rohmaterial (6), so daß dieses eine geneigte Schüttgutoberfläche (7) bildet, mit mindestens einem seitlichen Brennraum (8), der mit mindestens einem Brenner (9, 10) ausgestattet ist, so daß auf der Schüttgutoberfläche (7) eine Schmelzzone mit einer Schmelzoberflächenkruste (7a) gebildet wird und mit einem Sammelraum (11) sowie einem Auslaß für die im Bereich der Schüttgutoberfläche (7) herabfließende Schmelze, dadurch gekennzeichnet, daß mindestens ein feststehender an den Enden offener Hohlkörper (12) im Bereich des Rohmaterials (6) angeordnet ist, der mit Abstand von der Innenseite der Schmelzoberflächenkruste (7a) mündet, und daß in dem Hohlkörper (12) ein bewegliches Schubelement (16, 17, 18, 19) vorgesehen ist, welches mit dem aus dem Hohlkörper (12) herausragenden Ende (19) in die Schmelzoberflächenkruste (7a) eingreift.

5. Schmelzofen nach Anspruch 4, dadurch gekennzeichnet, daß der Hohlkörper als Rohr (12) ausgebildet ist, welches im Bereich des Rohmaterials (6) einen geschlossenen Mantel aufweist, und daß das Schubelement eine Förderschnecke (16) aufweist.

6. Schmelzofen nach Anspruch 5, dadurch gekennzeichnet, daß das Rohr (12) in einem Bereich außerhalb des Aufnahmeraumes für das Rohmaterial (6) als nach oben offener Schneckentrog (13) ausgebildet ist, und daß oberhalb des Schneckentroges (13) eine Aufgabevorrichtung (23) für die Zugabe von Abfall- bzw. Recyclingmaterial angeordnet ist.

7. Schmelzofen nach Anspruch 5 oder 6, dadurch gekennzeichnet, daß die Förderschnecke (16) aus einer Welle (17) und einer aufgeschweißten Schneckenwendel (18) besteht, welche sich von dem Schneckentrog (13) bis in die Schmelzoberflächenkruste (7a) erstreckt.

8. Schmelzofen nach Anspruch 7, dadurch gekennzeichnet, daß die Welle (17) mit ihrem äußeren Ende aus dem Rohr (12) herausragt und mit einem Antrieb (20), bevorzugt einem Elektro-Getriebemotor, verbunden ist, so daß die Welle (17) und die Schneckenwendel (18) um ihre Achse drehbar sind.

9. Schmelzofen nach Anspruch 8, dadurch gekennzeichnet, daß der Antrieb (20) auf einer Linearführung (21) gelagert ist, so daß die Einheit aus Antrieb (20), Welle (17) und Schnecke (16, 18) in Axialrichtung hin- und herbewegbar ist.

10. Schmelzofen nach Anspruch 9, dadurch gekennzeichnet, daß der Hub (22) der Hin- und Herbewegung stufenlos verstellbar ist.

11. Schmelzofen nach Anspruch 10, dadurch gekennzeichnet, daß der Hub (22) im Mittel etwa 300 mm beträgt.

12. Schmelzofen nach einem der Ansprüche 9 bis 11, dadurch gekennzeichnet, daß die Hin- und Herbewegung mittels einer Hydraulikvorrichtung steuerbar ist.

13. Schmelzofen nach einem der Ansprüche 5 bis 12, dadurch gekennzeichnet, daß die Förderschnecke (16) formmäßig dem Rohr (12) angepaßt und die Leistung so ausgelegt ist, daß in Abhängigkeit vom Füllungsgrad etwa 20 bis 30 m³ je Stunde an Abfall- bzw. Recyclingmaterial zuführbar sind.

14. Schmelzofen nach einem der Ansprüche 7 bis 13, dadurch gekennzeichnet, daß die Schneckenwendel (18) einen Außendurchmesser von etwa 275 mm aufweist.

15. Schmelzofen nach einem der Ansprüche 5 bis 14, dadurch gekennzeichnet, daß das Rohr (12) etwa 300 bis 600 mm, vorzugsweise etwa 500 mm innenseitig vor der Schmelzoberflächenkruste (7a) endet.

16. Schmelzofen nach einem der Ansprüche 7 bis 15, dadurch gekennzeichnet, daß die Welle (17) und die Schneckenwendel (18) aus hitzebeständigem Material bestehen.

17. Schmelzofen nach einem der Ansprüche 6 bis 16, dadurch gekennzeichnet, daß die Förderschnecke (16) im Bereich des Schneckentroges (13) teilbar ausgebildet ist, so daß bei Verschleiß des inneren Endes (19) jeweils ein Verlängerungsstück einsetzbar ist.

18. Schmelzofen nach einem der Ansprüche 5 bis 17, dadurch gekennzeichnet, daß das Rohr (12) und die Förderschnecke (16) im wesentlichen waagerecht angeordnet sind.

19. Schmelzofen nach einem der Ansprüche 5 bis 17, dadurch gekennzeichnet, daß das Rohr (12) und die Förderschnecke (16) schräg verlaufend, vorzugsweise senkrecht zu der Schmelzoberflächenkruste (7a), angeordnet sind.

20. Schmelzofen nach einem der Ansprüche 5 bis 19, dadurch gekennzeichnet, daß mehrere Rohre neben- und / oder übereinander oder bei einem Schüttgutkegel radial zu der Kegeloberfläche angeordnet sind.

21. Schmelzofen nach Anspruch 18, dadurch gekennzeichnet, daß das Rohr (12) und die Förderschnecke (16) etwa auf mittlerer Höhe zu der Schüttgutoberfläche (7) angeordnet sind.

22. Schmelzofen nach einem der Ansprüche 5 bis 21, dadurch gekennzeichnet, daß das Rohr (12) in Längsrichtung beweglich angeordnet ist und mittels einer Hubvorrichtung betätigbar ist.

23. Schmelzofen nach Anspruch 22, dadurch gekennzeichnet, daß das nach der Schmelzoberflächenkruste (7a) zu liegende Ende des Rohres (12) aus hitzebeständigem Material, vorzugsweise aus Hartmetall besteht.

24. Schmelzofen nach Anspruch 22 oder 23, dadurch gekennzeichnet, daß das Rohr (12) im Bereich des Rohmaterials (6) mit äußeren Rippen oder Vorsprüngen versehen ist.

25. Schmelzofen nach einem der Ansprüche 4 bis 24, dadurch gekennzeichnet, daß die Aufgabevorrichtung (5) für das Rohmaterial (6) derart gestaltet ist, daß das Rohmaterial (6) zwischen zwei vertikalen und mit Abstand voneinander angeordneten Schmelzofenwänden einen dachartigen Rücken mit zwei geneigten Schüttgutoberflächen bildet, und daß die Hohlkörper (12) und Schubelemente (16, 17, 18, 19) zueinander versetzt und derart angeordnet sind, daß nur ihre inneren Enden nahe der Schmelzoberflächenkrusten (7a) liegen, und daß seitlich jeder der geneigten Schüttgutoberflächen ein Brennraum (8) angeordnet ist.

26. Schmelzofen nach einem der Ansprüche 4 bis 24, dadurch gekennzeichnet, daß mehrere Brennräume seitlich der Schüttgutoberflächen des Rohmaterials angeordnet sind.

## Claims

1. Method for making a melt for mineral fiber production, wherein the raw material (6) to be melted is fed as a bulk material so that the same forms an inclined bulk material surface (7), and wherein at least part of the bulk material surface (7) is subject to the melting temperature of a combustion space (8) for the formation of a melting zone, and the melt which flows down in the region of the bulk material surface (7) under the formation of a melting surface crust (7a) is collected on the bottom of said combustion space (8) in a collection space (11) and is discharged to the outside for further processing, characterized in that said melting surface crust (7a) of said bulk material surface (7) is broken up from the inside in at least one region.

2. Method according to claim 1, characterized in that the breaking-up of the melting surface crust (7a) is effected at plural juxtaposed and/or superposed regions.

3. Method according to claim 1 or 2, characterized in that to the inner side of the melting surface crust (7a) recycling material or waste material is fed.

4. Melting furnace for carrying out the method according to one of the claims 1 to 3, comprising a feeding device (5) for the raw material (6) to be melted, a receiving space for said raw material (6), so that the same forms an inclined bulk material surface (7), at least one lateral combustion space (8) equipped with at least one burner (9,10), so that a melting zone with a melting surface crust (7a) is formed on the bulk material surface (7), and a collecting space (11) as well as an outlet for the melt flowing down in the region of the bulk material surface (7), characterized in that at least one stationary hollow body (12) which is open on its ends is arranged in the region of the raw material (6), which hollow body ends with a distance from the inner side of the melting surface crust (7a), and that within said hollow body (12) a movable thrust member (16,17,18,19) is provided which engages with said melting surface crust (7a) by its end (19) protruding from said hollow body (12).

5. Melting furnace according to claim 4, characterized in that said hollow body is formed as a tube (12) which in the region of the raw material (6) includes a closed jacket, and that said thrust member includes a conveyor worm (16).

6. Melting furnace according to claim 5, characterized in that said tube (12) is formed as an upwardly open worm trough (13) in a region outside of the receiving space for the raw material (6), and that above said worm trough (13) a feeding device (23) is provided for the addition of waste or recycling material.

7. Melting furnace according to claim 5 or 6, characterized in that said conveyor worm (16) is comprised of a shaft (17) and a worm helix (18) welded onto it, said worm helix extending from said worm trough (13) up and into the melting surface crust (7a).

8. Melting furnace according to claim 7, characterized in that said shaft (7) protrudes by the outer end thereof from said tube (12) and is connected to a drive (20), preferably an electric geared unit, so that said shaft (17) and worm helix (18) are rotatable about their axis.

9. Melting furnace according to claim 8, characterized in that said drive (20) is supported on a linear guide (21), so that the unit composed of said drive (20), shaft (17) and worm (16,18) can be reciprocated in the axial direction.

10. Melting furnace according to claim 9, characterized in that the stroke (22) of said reciprocating motion is steplessly adjustable.

11. Melting furnace according to claim 10, characterized in that the stroke (22) amounts to an average of 300 mm.

12. Melting furnace according to one of the claims 9 to 11, characterized in that said reciprocating motion is controllable by means of a hydraulic device.

13. Melting furnace according to one of the claims 5 to 12, characterized in that said conveyor worm (16) is adapted in its shape to said tube (12) and that the rating is such that, depending on the degree of filling, approximately 20 to 30 m³ of waste or recycling material can be fed per hour.

14. Melting furnace according to one of the claims 7 to 13, characterized in that said worm helix (18) has an outer diameter of approximately 275 mm.

15. Melting furnace according to one of the claims 5 to 14, characterized in that said tube (12) terminates approximately 300 to 600 mm, preferably about 500 mm, before the melting surface crust (7a) at the inner side thereof.

16. Melting furnace according to one of the claims 7 to 15, characterized in that the shaft (17) and the worm helix (18) consist of heat-resistant material.

17. Melting furnace according to one of the claims 6 to 16, characterized in that the conveyor worm (16) is formed to be separable in the area of the worm trough (13), so that when the inner end (19) is worn an extension piece can be inserted, respectively.

18. Melting furnace according to one of the claims 5 to 17, characterized in that the tube (12) and the conveyor worm (16) are substantially horizontally arranged.

19. Melting furnace according to one of the claims 5 to 17, characterized in that the tube (12) and the conveyor worm (16) are arranged to extend in an oblique fashion, preferably vertically to the melting surface crust (7a).

20. Melting furnace according to one of the claims 5 to 19, characterized in that plural tubes are arranged beside and/or on top of each other or, in the case of a bulk material cone, radially to the surface of the cone.

21. Melting furnace according to claim 18, characterized in that the tube (12) and the conveyor worm (16) are arranged at approximately the average height relative to the bulk material surface (7).

22. Melting furnace according to one of the claims 5 to 21, characterized in that the tube (12) is arranged to be movable in the longitudinal direction and is adapted to be actuated by means of a lifting device.

23. Melting furnace according to claim 22, characterized in that the end of the tube (12) lying towards the melting surface crust (7a) consists of a heat-resistant material, preferably of hard metal.

24. Melting furnace according to claim 22 or 23, characterized in that the tube (12) is provided in the region of the raw material (6) with outer fins or projections.

25. Melting furnace according to one of the claims 4 to 24, characterized in that the feeding device (5) for the raw material (6) is designed in such a fashion that the raw material (6) forms between two vertically arranged and mutually spaced melting furnace walls a roof-like back with two inclined bulk material surfaces, and that the hollow body (12) and the thrust members (16,17,18,19) are mutually offset and arranged in such a fashion that only the inner ends thereof are close to the melting surface crust (7a), and that laterally of each of said inclined bulk material surfaces a combustion space (8) is arranged.

26. Melting furnace according to one of the claims 4 to 24, characterized in that plural combustion spaces are arranged laterally of the bulk material surfaces of the raw material.

## Revendications

1. Procédé de fabrication d'un bain de fusion pour la production de fibres minérales, le matériau brut (6) à fondre étant chargé comme matériau en vrac si bien que celui-ci forme une surface inclinée de matériau en vrac (7), et au moins une partie de la surface du matériau en vrac (7) étant soumise, pour former une zone de fusion, à la température de fusion d'un espace de combustion (8) et le bain de fusion qui s'écoule en descendant dans la zone de la surface du matériau en vrac (7) en formant une croûte de surface de fusion (7a) étant collecté sur le sol de l'espace de combustion (8) et étant évacué vers l'extérieur pour le traitement ultérieur, caractérisé en ce que la croûte de la surface de fusion (7a) de la surface du matériau en vrac (7) est percée à partir du côté intérieur au moins dans une zone.

2. Procédé selon la revendication 1, caractérisé en ce que la percée de la croûte de la surface de fusion (7a) est effectuée sur plusieurs zones situées les unes à côté et/ou les unes au-dessus des autres.

3. Procédé selon la revendication 1 ou 2, caractérisé en ce que du matériau de recyclage (23) ou des déchets sont chargés sur le côté intérieur de la croûte de la surface de fusion (7a).

4. Four de fusion pour exécuter le procédé selon l'une des revendications 1 à 3, avec un dispositif d'alimentation (5) pour le matériau brut à fondre (6), avec un espace de réception pour le matériau brut (6) si bien que celui-ci forme une surface inclinée de matériau en vrac (7), avec au moins un espace de combustion latéral (8) qui est équipé d'au moins un brûleur (9, 10) si bien qu'une zone de fusion avec une croûte de surface de fusion (7a) est formée sur la surface du matériau en vrac (7), et avec un espace de collecte (11) ainsi qu'une sortie pour le bain de fusion qui s'écoule en descendant dans la zone de la surface du matériau en vrac, caractérisé en ce qu'au moins un corps creux (12) fixe, ouvert aux extrémités, est placé dans la zone du matériau brut (6), corps creux qui débouche à un certain écart du côté intérieur de la crôute de la surface de fusion (7a) et qu'un élément de poussée mobile (16, 17, 18, 19) est prévu dans le corps creux (12), élément de poussée qui mord, avec l'extrémité (19) qui fait saillie du corps creux (12), dans la croûte de la surface de fusion (7a).

5. Four de fusion selon la revendication 4, caractérisé en ce que le corps creux est configuré comme un tube (12) qui présente, dans la zone du matériau brut (6), une enveloppe fermée et que l'élément de poussée présente une hélice transporteuse (16).

6. Four de fusion selon la revendication 5, caractérisé en ce que le tube (12) est configuré dans une zone à l'extérieur de la zone de réception pour le matériau brut (6) comme un auget d'hélice (13) ouvert vers le haut et qu'au-dessus de l'auget d'hélice (13) il est placé un dispositif d'alimentation pour l'addition de déchets ou de matériau de recyclage.

7. Four de fusion selon la revendication 5 ou 6, caractérisé en ce que l'hélice transporteuse (16) est constituée par un arbre (17) et une spire d'hélice (18) soudée dessus qui s'étend de l'auget d'hélice (13) jusque dans la croûte de la surface de fusion (7a).

8. Four de fusion selon la revendication 7, caractérisé en ce que l'arbre (17) fait saillie avec son extrémité extérieure du tube (12) et est relié à un entraînement (20), de préférence à un électoréducteur, si bien que l'arbre (17) et la spire d'hélice (18) sont rotatifs autour de leur axe.

9. Four de fusion selon la revendication 8, caractérisé en ce que l'entraînement (20) est positionné sur un guide linéaire (21) si bien que l'unité composée de l'entraînement (20), de l'arbre (17) et de la vis (16, 18) est mobile en va-et-vient dans le sens axial.

10. Four de fusion selon la revendication 9, caractérisé en ce que la course (22) du mouvement en va-et-vient est réglable en continu.

11. Four de fusion selon la revendication 10, caractérisé en ce que la course (22) est en moyenne d'environ 300 mm.

12. Four de fusion selon l'une des revendications 9 à 11, caractérisé en ce que le mouvement en va-et-vient peut être commandé au moyen d'un dispositif hydraulique.

13. Four de fusion selon l'une des revendications 5 à 12, caractérisé en ce que la vis transporteuse (16) est adaptée, quant à sa forme, au tube (12) et la puissance conçue telle qu'en fonction du degré de remplissage, environ 20 à 30 m3 de déchets ou de matériau de recyclage peuvent être amenés par heure.

14. Four de fusion selon l'une des revendications 7 à 13, caractérisé en ce que la spire d'hélice (18) présente un diamètre extérieur d'environ 275 mm.

15. Four de fusion selon l'une des revendications 5 à 14, caractérisé en ce que le tube se termine à environ 300 à 600 mm, de préférence à environ 500 mm, sur le côté intérieur devant la croûte de la surface de fusion (7a).

16. Four de fusion selon l'une des revendications 7 à 15, caractérisé en ce que l'arbre (17) et la spire d'hélice (18) sont constitués en matériau résistant à la chaleur.

17. Four de fusion selon l'une des revendications 6 à 16, caractérisé en ce que l'hélice transporteuse (16) est configurée divisible dans la zone de l'auget d'hélice (13) si bien qu'en cas d'usure de l'extrémité intérieure (19) une rallonge peut respectivement être mise en place.

18. Four de fusion selon l'une des revendications 5 à 17, caractérisé en ce que le tube (12) et l'hélice transporteuse (16) sont placées substantiellement horizontalement.

19. Four de fusion selon l'une des revendications 5 à 17, caractérisé en ce que le tube (12) et l'hélice transporteuse (16) sont placés en biais, de préférence perpendiculairement à la croûte de la surface de fusion (7a).

20. Four de fusion selon l'une des revendications 5 à 19, caractérisé en ce que plusieurs tubes sont placés les uns à côté et/ou les uns sur les autres ou, pour un cône de matériau en vrac, radialement par rapport à la surface du cône.

21. Four de fusion selon la revendication 18, caractérisé en ce que le tube (12) et l'hélice transporteuse (16) sont placés à peu près à mi-hauteur de la surface du matériau en vrac (7).

22. Four de fusion selon l'une des revendications 5 à 21, caractérisé en ce que le tube (12) est placé mobile dans le sens longitudinal et peut être actionné au moyen d'un dispositif de levage.

23. Four de fusion selon la revendication 22, caractérisé en ce que l'extrémité du tube (12) qui doit être posée vers la croûte de la surface de fusion (7a) est constituée par du matériau résistant à la chaleur, de préférence par du métal dur.

24. Four de fusion selon la revendication 22 ou 23, caractérisé en ce que le tube (12) est pourvu, dans la zone du matériau brut (6), de nervures ou de saillies extérieures.

25. Four de fusion selon l'une des revendications 4 à 24, caractérisé en ce que le dispositif d'alimentation (5) pour le matériau brut (6) est configuré de telle manière que le matériau brut (6) forme, entre deux parois du four de fusion verticales et placées à un certain écart l'une de l'autre, une partie dorsale de type toit avec deux surfaces inclinées de matériau en vrac et que les corps creux (12) et les éléments de poussée (16, 17, 18, 19) sont placés en étant décalés l'un par rapport à l'autre et de telle manière que seulement leurs extrémités intérieures se situent près des croûtes de la surface de fusion (7a) et qu'un espace de combustion (8) est placé latéralement de chacune des surfaces inclinées de matériau en vrac.

26. Four de fusion selon l'une des revendications 4 à 24, caractérisé en ce que plusieurs espaces de combustion sont placés latéralement par rapport aux surfaces de matériau en vrac du matériau brut.
